# FASCICULE DE BREVET EUROPEEN

(11) **EP 0 942 842 B1**
(45) Date de publication et mention de la délivrance du brevet: **30.01.2002**
(21) Numéro de dépôt: 97950231.7
(22) Date de dépôt: 05.12.1997
(51) Int. Cl.: B60K 41/02

(54) **PROCEDE DE COMMANDE D'UN EMBRAYAGE DE VEHICULE ROUTIER**
VERFAHREN ZUR STEUERUNG EINER KUPPLUNG EINES KRAFTFAHRZEUGES
METHOD FOR CONTROLLING A ROAD VEHICLE CLUTCH

(30) Priorité: 13.12.1996 FR 9615329
(43) Date de publication de la demande: 22.09.1999
(73) Titulaire: RENAULT, 92109 Boulogne-Billancourt (FR)
(72) Inventeur: POUYAU, Laurent, F-92290 Châtenay Malabry (FR); RIVOIRON, Sylvain, F-95320 Saint Leu la Forêt (FR)
(86) Numéro de dépôt international: FR9702213
(87) Numéro de publication internationale: WO9825781

(56) Documents cités:
- FR-A- 2 645 805
- GB-A- 2 158 912
- GB-A- 2 280 721

## Description

La présente invention se rapporte à la commande automatique d'un embrayage disposé entre un moteur de véhicule et une boîte de vitesses mécanique.

Plus précisément, elle concerne la commande d'un embrayage associé à une boîte de vitesses à baladeurs, en fonction de la situation du levier de changement de vitesses, de la position de la pédale de frein et de la pédale d'accélérateur, de la vitesse de déplacement du véhicule, et du régime du moteur.

De façon classique, les embrayages pilotés sont actionnés par l'intermédiaire d'un récepteur hydraulique soumis à une pression hydraulique de commande qui lui permet d'agir sur une fourchette d'embrayage, de façon à déplacer une butée de débrayage contre le centre d'un diaphragme. Le plus souvent, un tel système comporte un groupe électropompe, placé sous le contrôle d'un calculateur, de façon à générer une pression hydraulique d'alimentation du récepteur en suivant une stratégie qui vise à obtenir un fonctionnement similaire à celui d'un embrayage classique.

Selon les dispositions habituelles dans ce domaine, le démarrage du véhicule est amorcé en réponse à l'élévation du régime moteur résultant de l'enfoncement de la pédale d'accélérateur, et l'embrayage est toujours fermé de façon suffisamment progressive pour que son patinage écarte les risques de calage pendant le démarrage.

Par ailleurs, lors du retour du véhicule vers de faibles vitesses de déplacement, l'embrayage est en principe ouvert avant d'atteindre le régime de ralenti du moteur, en vue d'écarter également les risques de calage avant l'arrêt. Cette mesure, imposant dans certaines circonstances le patinage de l'embrayage en cours de roulage, par exemple à l'occasion d'une reprise de vitesse à bas régime dans un embouteillage, est parfois mal ressentie par les usagers.

Enfin, lors de toutes les manoeuvres de parking, l'embrayage piloté réagit aux sollicitations de la pédale d'accélérateur en patinant, si bien que, d'une façon générale, les petits déplacements du véhicule sont difficiles à contrôler.

GB 2280721 propose un procédé de commande d'un embrayage selon le préambule de la revendication 1. Ce système prévoit un mode de rampement à faible vitesse avec l'embrayage engagé en fonction de la position du sélecteur de vitesse et du régime moteur et il est préru d'ouvrir l'embrayage si le frein est actionné.

La présente invention vise à supprimer certains inconvénients liés à la progressivité d'un embrayage piloté.

Elle propose dans ce but que la fermeture de l'embrayage à l'arrêt soit autorisée sur au moins un rapport de la transmission sans que la pédale d'accélération ne soit sollicitée, de façon à permettre au véhicule de démarrer sur le ralenti du moteur.

L'invention prévoit de prendre en considération un indicateur supplémentaire pour imposer l'ouverture de l'embrayage en cours de démarrage sur le ralenti. Cet indicateur est la quantité d'énergie ayant transité par l'embrayage depuis le début de l'opération de démarrage sur le ralenti concernée. Le calcul du dépassement d'énergie s'effectue par exemple à partir d'une mesure de la position de l'embrayage sur le capteur de position de l'actionneur hydraulique d'embrayage, et de la détermination du différentiel de régime entre l'arbre de sortie du moteur, et l'arbre d'embrayage. Conformément à l'invention, la fermeture de l'embrayage est interrompue, lorsque la quantité d'énergie transférée au travers de l'embrayage postérieurement au début d'un démarrage sur le ralenti dépasse un seuil préétabli. Cette mesure vise à éviter des utilisations aberrantes du système d'embrayage piloté, telles que le démarrage sur un rapport supérieur de la transmission ou le maintien du véhicule en équilibre sur l'embrayage en côte, soumettant l'embrayage à des efforts excessifs.

Pour faciliter les manoeuvres de parking, l'invention propose également que le roulage du véhicule sur le ralenti, soit autorisé sur au moins un rapport de la transmission.

Ces dispositions permettent notamment que l'interruption de l'accélération sans appui sur la pédale de frein en cours de démarrage, laisse l'embrayage poursuivre sa fermeture.

D'autres caractéristiques et avantages de la présente invention apparaîtront clairement à la lecture de la description suivante de celle-ci, en liaison avec le dessin annexé, sur lequel la figure unique met en évidence les différentes situations gérées par le procédé de commande proposé.

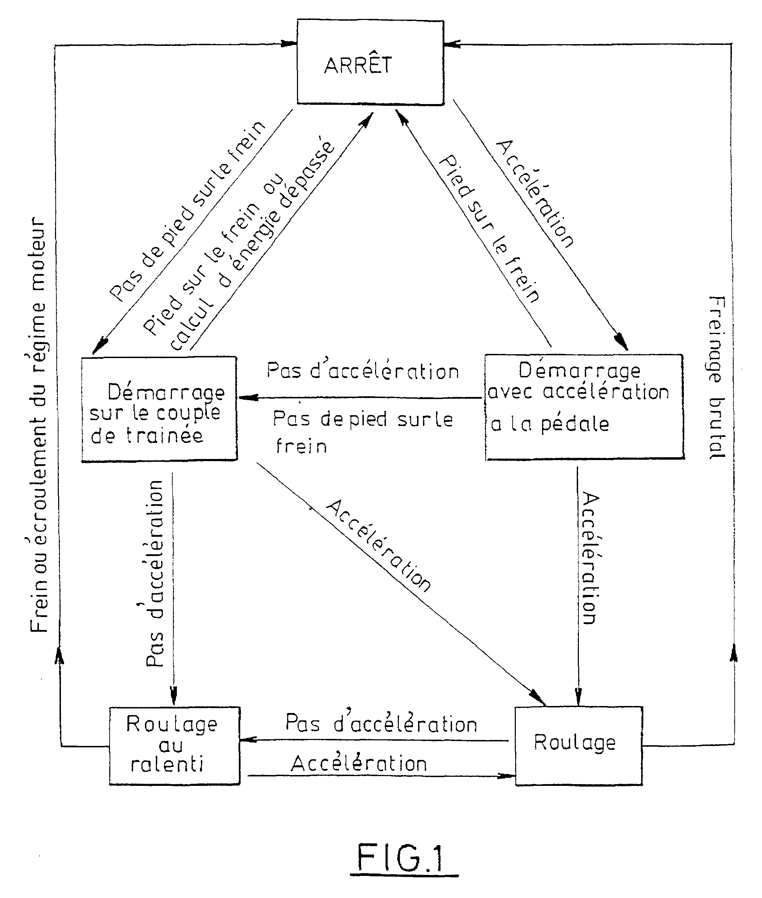

La figure 1 fait apparaître cinq situations distinctes d'un véhicule équipé d'un embrayage piloté conformément à l'invention.

A l'arrêt, l'embrayage est ouvert. Les situations de démarrage, avec accélération commandée à la pédale ou sur le seul couple de traînée du moteur tournant au ralenti, mentionnées sur le schéma correspondent à des situations transitoires de fermeture progressive. de l'embrayage, qui sont gérées par le calculateur d'embrayage, lorsque le véhicule quitte l'arrêt. Enfin, dans les situations de roulage sur le ralenti du moteur, l'embrayage est fermé.

Conformément à l'invention, il est nécessaire que le conducteur conserve son pied sur la pédale de frein pour que le véhicule reste à l'arrêt lorsque certains rapports sont engagés, bien que le moteur tourne au ralenti, et que la pédale d'accélérateur ne soit pas sollicitée.

Le véhicule peut quitter l'arrêt dès que le conducteur lâche le frein, sans qu'il soit lui nécessaire d'accélérer. En effet, il est prévu que la seule information de relâchement du frein déclenche la fermeture progressive de l'embrayage correspondant à la situation de «démarrage sur le ralenti».

Comme indiqué sur le schéma, le démarrage sur le ralenti débouche soit sur le roulage du véhicule au ralenti, lorsque que le véhicule n'est pas entraîné à une vitesse plus élevée par l'accélération du conducteur (ou bien entendu par la pente du terrain), soit à une vitesse plus élevée.

Le freinage'en cours de démarrage sur le ralenti interrompt par ailleurs la fermeture de l'embrayage, et ramène le véhicule à l'arrêt (embrayage ouvert, pas d'accélération, et pied sur le frein).

Bien entendu, la décélération du véhicule sans freinage conduit naturellement le véhicule à rouler au ralenti, car la simple décélération ne provoque pas l'ouverture de l'embrayage. En revanche, l'appui sur le frein en situation de roulage sur le ralenti, (c'est-à-dire en fin de démarrage sur le ralenti), ou en cours de démarrage sur l'accélération, impose l'ouverture de l'embrayage avant l'arrêt complet du véhicule, pour éviter le calage.

L'invention prévoit également d'imposer l'ouverture de l'embrayage dans le cas d'un freinage brutal sur une vitesse supérieure au ralenti, détecté par exemple en comparant la dérivée de la vitesse de freinage à un seuil de décélération préétabli. Cette disposition vise à empêcher le calage du moteur en cas d'immobilisation anticipée des roues pendant le freinage, notamment sur route glissante. Elle présente un grand intérêt en terme de sécurité, car elle permet au véhicule de bénéficier instantanément d'une réaction de roue sur la chaussée en fin de dérapage, au lieu de poursuivre son déplacement en roue libre.

En cas d'interruption de l'accélération lors d'un démarrage sur l'accélérateur sans appui sur le frein, l'invention prévoit enfin que l'embrayage poursuive sa fermeture, de façon à faire démarrer le véhicule sur le couple de traînée du moteur, en retrouvant les conditions d'un démarrage initialisé sur le ralenti du moteur.

Sans limiter pour autant la portée de l'invention, à l'application correspondante, on peut prévoir par exemple que le démarrage et le roulage sur le ralenti ne soient autorisés que sur certains rapports de la transmission, tels que les deux premiers rapports de marche avant et la marche arrière.

Les dispositions proposées par l'invention présentent de nombreux avantages en termes de confort d'utilisation et de sécurité. En particulier, le léger patinage imposé à l'embrayage en phase de démarrage, indépendamment de la position de la pédale d'accélération, permet d'effectuer de petits déplacements sur le couple de traînée du moteur tournant au ralenti, dans les mêmes conditions qu'avec une transmission automatique, tandis que l'ouverture anticipée de l'embrayage en réponse au freinage, ou en cas d'écroulement du régime moteur, supprime pratiquement tout risque de calage.

## Revendications

1. Procédé de commande d'un embrayage de véhicule routier associé à une boîte de vitesses à baladeurs en fonction de la situation du levier de changement de vitesses, de la situation de la pédale de frein, de la vitesse de déplacement du véhicule, et du régime du moteur, où la fermeture de l'embrayage à l'arrêt est autorisée sur au moins un rapport de la transmission sans que la pédale d'accélération ne soit sollicitée, de façon à permettre au véhicule de démarrer sur le ralenti du moteur, **caractérisé en ce que** cette fermeture est interrompue lorsque la quantité d'énergie transférée au travers de l'embrayage postérieurement au début d'un démarrage sur le ralenti dépasse un seuil préétabli.

2. Procédé de commande selon la revendication 1, **caractérisé en ce que** le démarrage du véhicule sur le ralenti intervient lorsque la pédale de frein n'est pas sollicitée.

3. Procédé de commande selon la revendication 1 ou 2, **caractérisé en ce que** l'interruption de l'accélération du véhicule, sans appui sur la pédale de frein en cours de démarrage, laisse l'embrayage poursuivre sa fermeture.

4. Procédé de commande selon l'une des revendication précédentes, **caractérisé en ce que** l'interruption de l'accélération du véhicule en cours de roulage, sans appui sur la pédale de frein, conduit le véhicule à rouler sur le ralenti.

5. Procédé de commande selon l'une des revendications précédentes, **caractérisé en ce que** l'appui brutal sur la pédale de frein en situation de roulage entraîne l'ouverture de l'embrayage avant le calage du moteur.

6. Procédé de commande selon l'une des revendications précédentes, **caractérisé en ce que** l'écroulement du régime moteur sur le ralenti entraîne l'ouverture de l'embrayage avant le calage du moteur.

7. Procédé de commande selon l'une des revendications précédentes **caractérisées en ce que** le démarrage et/ou le roulage sur le ralenti sont autorisés sur les deux premiers rapports de marche avant et sur la marche arrière.

## Patentansprüche

1. Verfahren zur Steuerung einer Kupplung in einem Straßenfahrzeug, welche mit einem Schieberädergetriebe verbunden ist und von der Lage des Schalthebels, der Position des Brems- und des Gaspedals, der Fahrgeschwindigkeit des Fahrzeugs und der Motordrehzahl abhängig ist, in dem das Schließen der Kupplung im Stillstand in wenigstens einem Übersetzungsverhältnis erlaubt wird, ohne dass dabei das Gaspedal in Anspruch genommen wird, so dass das Fahrzeug im Leerlauf des Motors anfahren kann, **dadurch gekennzeichnet, dass** dieser Schließvorgang unterbrochen wird, wenn die nach dem Beginn eines Starts im Leerlauf durch die Kupplung geführte Energiemenge eine vorbestimmte Schwelle überschreitet.

2. Steuerungsverfahren nach Anspruch 1, **dadurch gekennzeichnet, dass** das Anfahren des Fahrzeugs im Leerlauf dann vorkommt, wenn das Bremspedal nicht in Anspruch genommen wird.

3. Steuerungsverfahren nach Anspruch 1 oder 2, **dadurch gekennzeichnet, dass** das Unterbrechen des Beschleunigungsvorgangs des Fahrzeugs, ohne dass dabei beim Anfahren das Bremspedal betätigt wird, es zulässt, dass die Kupplung sich weiter schließt.

4. Steuerungsverfahren nach einem der vorstehenden Ansprüche, **dadurch gekennzeichnet, dass** das Unterbrechen des Beschleunigungsvorgangs des Fahrzeugs beim Fahren, ohne dass dabei das Bremspedal betätigt wird, das Fahrzeug dazu bringt, im Leerlauf zu fahren.

5. Steuerungsverfahren nach einem der vorstehenden Ansprüche, **dadurch gekennzeichnet, dass** die heftige Betätigung des Bremspedals beim Fahren die Öffnung der Kupplung vor dem Absterben des Motors bewirkt.

6. Steuerungsverfahren nach einem der vorstehenden Ansprüche, **dadurch gekennzeichnet, dass** der Zusammenbruch der Motordrehzahl im Leerlauf die Öffnung der Kupplung vor dem Absterben des Motors bewirkt.

7. Steuerungsverfahren nach einem der vorstehenden Ansprüche, **dadurch gekennzeichnet, dass** das Anfahren und/oder die Fahrt im Leerlauf in den zwei ersten Vorwärtsgängen und im Rückwärtsgang erlaubt werden.

## Claims

1. Method of control of a clutch of a road vehicle associated with a sliding gear transmission according to the situation of the gear changing lever, to the situation of the brake pedal, to the speed of travel of the vehicle, and to the engine speed, wherein the engagement of the clutch when stopped is allowed in at least one gear without the accelerator pedal being used, such as to allow the vehicle to move off when the engine is running idle, **characterised in that** this engagement is interrupted when the amount of energy transferred after the start of moving off when the engine is running idle exceeds a pre-determined threshold.

2. Method of control according to claim 1, **characterised in that** the moving off of the vehicle when running idle occurs when the brake pedal is not used.

3. Method of control according to claim 1 or 2, **characterised in that** interrupting the acceleration of the vehicle without pushing the brake pedal when moving off allows the clutch to continue engaging.

4. Method of control according to one of the preceding claims, **characterised in that** interrupting the acceleration of the vehicle when travelling without pushing the brake pedal makes the vehicle travel while running idle.

5. Method of control according to one of the preceding claims, **characterised in that** sudden pushing of the brake pedal while travelling leads to disengagement of the clutch prior to the engine stalling.

6. Method of control according to one of the preceding claims, **characterised in that** falling of the engine speed when running idle leads to disengagement of the clutch prior to the engine stalling.

7. Method of control according to one of the preceding claims, **characterised in that** moving off and/or travel when running idle are allowed in the two first forward gears and in reverse.
